# EUROPEAN PATENT APPLICATION

(11) **EP 4 503 389 A1**
(43) Date of publication of application: **05.02.2025**
(21) Application number: 23780469.5
(22) Date of filing: 28.03.2023
(51) Int. Cl.: H02K 1/18

(54) **STATOR CORE, STATOR CORE MANUFACTURING METHOD, AND ROTARY ELECTRIC MACHINE**

(30) Priority: 29.03.2022 JP 2022054363
(71) Applicant: NIPPON STEEL CORPORATION, Chiyoda-ku Tokyo 100-8071 (JP)
(72) Inventor: NATORI, Yoshiaki, Tokyo 100-8071 (JP)
(74) Representative: Vossius & Partner Patentanwälte Rechtsanwälte mbB
(86) International application number: PCT/JP2023/012402
(87) International publication number: WO 2023/190460

(57) **Abstract**

A stator core 20 has a band-like first core 24 and a plurality of second cores 26. The first core 24 has a plurality of first yoke forming parts 24a and a plurality of connection parts 24b that connect the first yoke forming parts 24a adjacent to each other in the circumferential direction to each other. The second core 26 has a second yoke forming part 26a sandwiched between a pair of adjacent first yoke forming parts 24a and a tooth forming part 26b that projects inward in the radial direction from the first yoke forming parts 24a. The first yoke forming part 24a and the second yoke forming part 26a are connected to each other at a first connection surface 40 and a second connection surface 60.

## Description

### TECHNICAL FIELD

The present invention relates to a split-type stator core, a manufacturing method for a stator including the stator core, and a rotary electric machine provided with the stator core.

### BACKGROUND ART

A split-type stator core in a structure in which a yoke and teeth are separated from each other is often used as a stator core for a rotary electric machine, such as an electric motor and a generator.

For example, Patent Document 1 discloses a stator for a rotary electric machine that includes a stator core formed by a combination of a plurality of yoke core parts located on the outer peripheral side of slots and tooth core parts that connect the plurality of yoke core parts to each other. The yoke core part has a circumferential contact surface, which is opposed to the tooth core part, on each side thereof in a circumferential direction of the stator core. Similarly, the tooth core part has a circumferential contact surface, which is opposed to the yoke core part, on each side thereof in the circumferential direction. Each circumferential contact surface is shaped to allow the yoke core part to be disposed between a pair of adjacent tooth core parts from the outer peripheral side. Furthermore, each circumferential contact surface is shaped to prevent the tooth core part from being drawn from between the pair of adjacent yoke core parts to the inner peripheral side.

With the stator for a rotary electric machine disclosed in Patent Document 1, the stator core can be completed by disposing a plurality of tooth core parts on a previously wound coil and then combining a plurality of yoke core parts and the plurality of tooth core parts. In this way, the coil can be easily disposed on the stator core.

### LIST OF PRIOR ART DOCUMENTS

### PATENT DOCUMENT

Patent Document 1: JP2010-233387A

### SUMMARY OF INVENTION

### TECHNICAL PROBLEM

As described above, with the stator for a rotary electric machine in Patent Document 1, each circumferential contact surface of the yoke core parts and the tooth core parts is shaped to prevent the tooth core part from being drawn from between the pair of yoke core parts to the inner peripheral side. Therefore, when the yoke core parts are fixed at appropriate positions, the tooth core parts can be prevented from moving to the inner peripheral side with respect to the yoke core parts.

However, the circumferential contact surfaces cannot adequately prevent the yoke core parts from moving to the outer peripheral side with respect to the tooth core parts. Therefore, the stator for a rotary electric machine in Patent Document 1 requires means for preventing the yoke core parts from moving to the outer peripheral side in addition to the circumferential contact surfaces. However, even if such means is provided, it is difficult to adequately prevent movement of the yoke core parts.

In view of this, an objective of the present invention is to provide a split-type stator core having a yoke and teeth that can be appropriately fixed and a rotary electric machine provided with the stator core.

### SOLUTION TO PROBLEM

The gist of the present invention includes a stator core, a manufacturing method for a stator, and a rotary electric machine described below.
(1) A split-type stator core having a cylindrical yoke and a plurality of teeth that project from the yoke inward in a radial direction of the yoke, including:
   a band-like first core; and a plurality of second cores that are fixed to the first core so as to project from the first core inward in the radial direction of the yoke,
   wherein the first core has a plurality of first yoke forming parts that form the yoke and are arranged at intervals in a circumferential direction of the yoke, and a plurality of connection parts that connect outer edges in the radial direction of the first yoke forming parts adjacent to each other in the circumferential direction to each other,
   each of the second cores has a second yoke forming part that forms the yoke and is sandwiched between a pair of the first yoke forming parts adjacent in the circumferential direction, and a tooth forming part that projects inward in the radial direction from the pair of first yoke forming parts to form one of the teeth,
   the first yoke forming part has a first connection surface to be connected to the second yoke forming part on each side in the circumferential direction,
   the second yoke forming part has a second connection surface to be connected to the first connection surface of the first yoke forming part on each side in the circumferential direction,
   when viewed in an axial direction of the yoke, provided that a virtual straight line extending in the radial direction by passing through a center of the first yoke forming part in the circumferential direction is a reference line of the first yoke forming part, the first connection surface includes a first inclined surface that is inclined with respect to the reference line so as to come closer to the reference line in the circumferential direction as it goes outward in the radial direction, and a second inclined surface that is provided on an inner side of the first inclined surface in the radial direction and is inclined with respect to the reference line so as to come closer to the reference line in the circumferential direction as it goes inward in the radial direction, and
   when viewed in the axial direction, the second connection surface to be connected to the first connection surface of the first yoke forming part has a third inclined surface and a fourth inclined surface that are inclined with respect to the reference line so as to extend along the first inclined surface and the second inclined surface of the first yoke forming part, respectively.
(2) The stator core according to (1) described above, wherein the tooth forming part has a coil supporting part that supports a coil, and
   in the circumferential direction, a width of the second yoke forming part is smaller than a width of the coil supporting part.
(3) The stator core according to (1) or (2) described above, wherein when viewed in the axial direction, provided that a virtual circle that is centered on an axial center of the yoke and circumscribes the plurality of first yoke forming parts is a reference circle, a recess that is recessed inward from the reference circle in the radial direction is formed in an outer surface of the connection part in the radial direction.
(4) The stator core according to any one of (1) to (3) described above, wherein the connection part is formed integrally with the pair of first yoke forming parts adjacent to each other.
(5) The stator core according to any one of (1) to (4) described above, wherein the connection part has a first connection part and a second connection part arranged side by side in the circumferential direction,
   the first connection part has a third connection surface that faces to the second connection part in the circumferential direction,
   the second connection part has a fourth connection surface that faces to the first connection part in the circumferential direction and is to be connected to the third connection surface, and
   the first connection part and the second connection part are integrally continuous to each other on an outer side of the third connection surface and the fourth connection surface in the radial direction.
(6) The stator core according to any one of (1) to (5) described above, wherein the first core and the plurality of second cores each include a plurality of non-oriented electromagnetic steel sheets stacked on one another.
(7) A method of manufacturing a stator including a stator core according to any one of (1) to (6) described above, wherein
   the first core in an expanded state is disposed on an outer side of a coil arranged in an annular shape, and
   the coil and the plurality of second cores are attached to the first core by sequentially inserting the plurality of second cores into the coil and the first core from an inner side of the coil while bending the first core along an outer circumference of the coil.
(8) A rotary electric machine, including:
   a stator core according to any one of (1) to (6) described above;
   a coil supported by the plurality of teeth of the stator core; and
   a rotor disposed inside the stator core.

### ADVANTAGEOUS EFFECTS OF INVENTION

According to the present invention, a split-type stator core having a yoke and teeth that can be appropriately fixed and a rotary electric machine provided with the stator core can be provided.

### BRIEF DESCRIPTION OF DRAWINGS

[Figure 1] Figure 1 is a diagram showing a configuration of a rotary electric machine according to an embodiment of the present invention.
[Figure 2] Figure 2 is a diagram showing a first core.
[Figure 3] Figure 3 is an enlarged view showing a connection between the first core and a second core.
[Figure 4] Figure 4 is a diagram for illustrating a manufacturing method for a stator.
[Figure 5] Figure 5 is a diagram showing another example of the first core.
[Figure 6] Figure 6 is a diagram showing another example of the first core.
[Figure 7] Figure 7 is a diagram showing another example of the first core.
[Figure 8] Figure 8 is a diagram showing another example of the rotary electric machine.
[Figure 9] Figure 9 is a diagram showing another example of the rotary electric machine.
[Figure 10] Figure 10 is a diagram showing another example of the rotary electric machine.
[Figure 11] Figure 11 is a diagram showing an example of the stator for reference.

### DESCRIPTION OF EMBODIMENTS

In the following, a stator core according to an embodiment of the present invention and a rotary electric machine provided with the same will be described with reference to the drawings.

### (Configuration of Rotary Electric Machine)

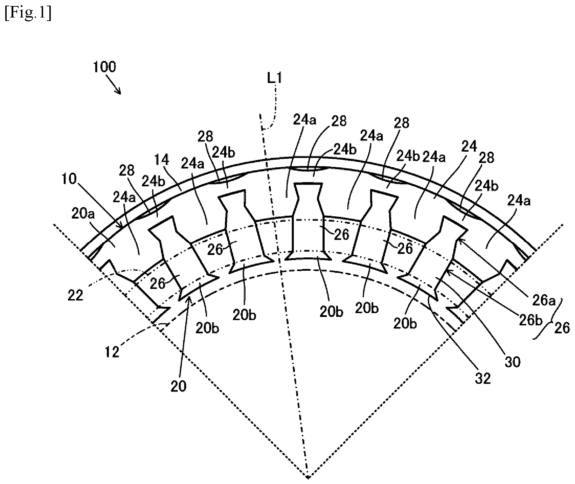

Figure 1 is a schematic diagram showing a rotary electric machine according to an embodiment of the present invention. Figure 1 shows a rotary electric machine 100 viewed in an axial direction of a yoke 20a described later. Figure 1 shows only a quarter of a circumferential region of the rotary electric machine 100.

As shown in Figure 1, the rotary electric machine 100 includes a stator 10, a rotor 12, and a case 14. For the sake of clarity, the rotor 12 and a coil 22 described later are simplified in the drawing.

The stator 10 has a stator core 20 and the coil 22. The rotor 12 is disposed inside the stator core 20 with an axial center (center of rotation) thereof coincident with an axial center of the stator core 20. The case 14 is attached to an outer peripheral surface of the stator core 20 by shrink fit, for example. The rotor 12 and the case 14 can have various known configurations, and therefore, detailed descriptions thereof will be omitted.

The stator core 20 has the cylindrical yoke 20a and a plurality of teeth 20b projecting inward in the radial direction of the yoke 20a from the yoke 20a. The coil 22 is supported on the plurality of teeth 20b. In this embodiment, the coil 22 may be supported on the plurality of teeth 20b in the distributed winding manner or in the concentrated winding manner.

In this embodiment, the stator core 20 includes twenty-four teeth 20b. However, the number of teeth is not limited to 24. In the following description, a direction simply referred to as an axial direction means the axial direction of the yoke 20a, a direction simply referred to as a circumferential direction means the circumferential direction of the yoke 20a, and a direction simply referred to as a radial direction means the radial direction of the yoke 20a.

In this embodiment, the stator core 20 is a split-type stator core and includes a band-like first core 24 and a plurality of second cores 26 fixed to the first core 24 and projecting inward in the radial direction from the first core 24. The first core 24 and the second cores 26 can each be formed of a plurality of sheet materials of a predetermined shape formed by punching an electromagnetic steel sheet, for example.

In this embodiment, the electromagnetic steel sheet used to form the first core 24 and the second cores 26 is a known non-oriented electromagnetic steel sheet. Whether the steel sheet forming the first core 24 and the second cores 26 is a grain-oriented electromagnetic steel sheet or a non-oriented electromagnetic steel sheet can be discriminated by measuring the magnetic flux density of the steel sheet. The magnetic flux density can be measured with a well-known gauss meter.

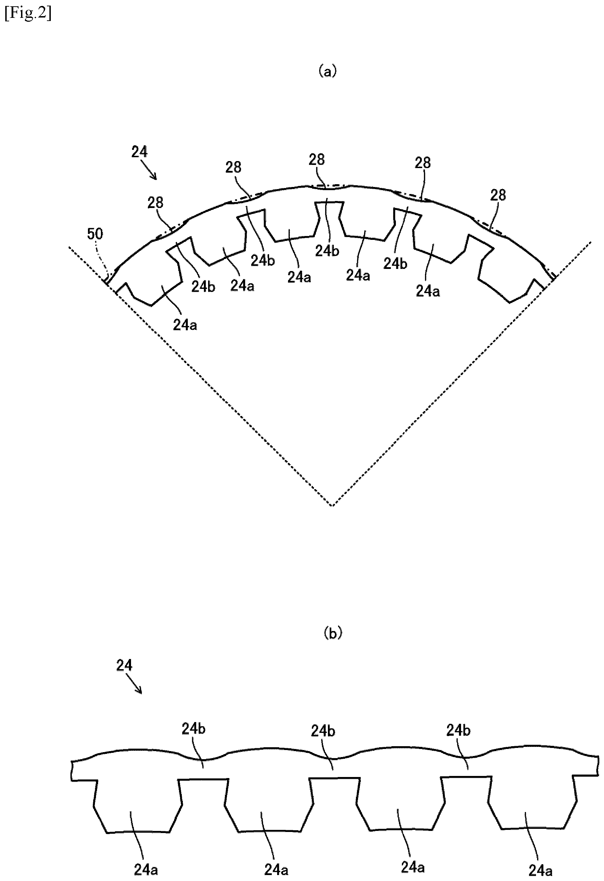

Figure 2 is a diagram showing the first core 24, Figure 2(a) shows the first core 24 assembled in the rotary electric machine 100, and Figure 2(b) shows the first core 24 expanded yet to be assembled in the rotary electric machine 100.

As described in detail later, one or more band-like first cores 24 used in the rotary electric machine 100 are bent into an annular or arc shape. In this embodiment, one first core 24 bent into an annular shape is used. As shown in Figures 1 and 2, the first core 24 has a plurality of first yoke forming parts 24a and a plurality of connection parts 24b. The plurality of first yoke forming parts 24a form the yoke 20a and are arranged at intervals in the circumferential direction. Each connection part 24b connects first yoke forming parts 24a that are adjacent to each other in the circumferential direction at outer peripheral edges thereof in the radial direction. In this embodiment, each connection part 24b is formed integrally with a pair of adjacent first yoke forming parts 24a.

As shown in Figure 2(a), when viewed in the axial direction, a virtual circle that is centered on the axial center of the yoke 20a and circumscribes the plurality of first yoke forming parts 24a is defined as a reference circle 50. In this embodiment, when viewed in the axial direction, a recess 28 that is recessed inward from the reference circle 50 in the radial direction is formed in an outer surface of the connection part 24b in the radial direction. In this embodiment, the first core 24 is configured such that the whole of the outer surfaces of the connection parts 24b is recessed.

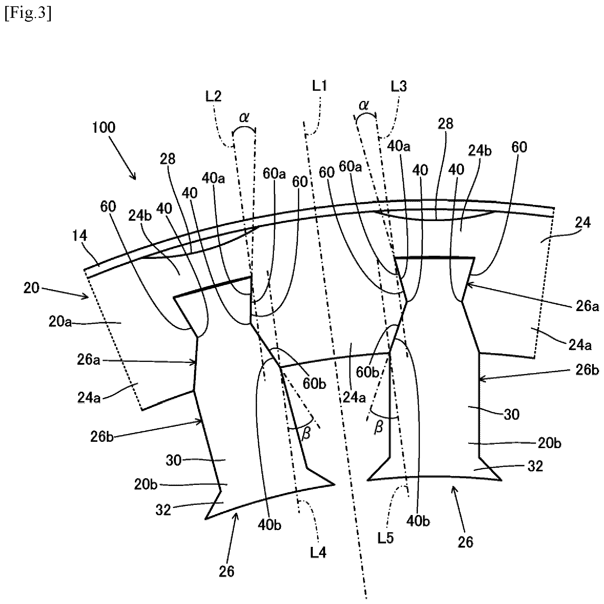

Figure 3 is an enlarged view showing a connection between the first core 24 and the second core 26. As shown in Figures 1 and 3, in this embodiment, the second core 26 has a second yoke forming part 26a and a tooth forming part 26b.

The second yoke forming part 26a forms the yoke 20a and is sandwiched between a pair of first yoke forming parts 24a adjacent to each other in the circumferential direction. The tooth forming part 26b forms the tooth 20b and projects inward in the radial direction from the pair of adjacent first yoke forming parts 24a. In this embodiment, the tooth forming part 26b has a coil supporting part 30 that is continuous to the second yoke forming part 26a and supports the coil 22 and a flange part 32 provided at a front end (an inner end in the radial direction) of the coil supporting part 30 to project from the coil supporting part 30 to both sides in the circumferential direction. In this embodiment, in the circumferential direction, the width of the second yoke forming part 26a is set to be equal to or smaller than the width of the coil supporting part 30. In the example shown in Figure 1, in the circumferential direction, the minimum width of the second yoke forming part 26a is smaller than the minimum width of the coil supporting part 30.

As shown in Figure 3, the first yoke forming part 24a has a first connection surface 40 to be connected to the second yoke forming part 26a on each side in the circumferential direction. The second yoke forming part 26a has a second connection surface 60 to be connected to the first connection surface 40 on each side in the circumferential direction. The first connection surface 40 is formed to project outward in the circumferential direction. The second connection surface 60 is formed to be recessed inward in the circumferential direction.

As shown in Figures 1 and 3, when viewed in the axial direction, a virtual straight line extending in the radial direction by passing through the center of a first yoke forming part 24a in the circumferential direction is defined as a reference line L1 of the first yoke forming part 24a. Figure 3 shows not only the reference line L1 but also straight lines L2 to L5 that are parallel to the reference line L1 when viewed in the axial direction.

As shown in Figure 3, the first connection surface 40 of the first yoke forming part 24a includes a first inclined surface 40a and a second inclined surface 40b. When viewed in the axial direction, the first inclined surface 40a is inclined with respect to the reference line L1 so as to come closer to the reference line L1 in the circumferential direction as it goes outward in the radial direction. The second inclined surface 40b is provided on the inner side of the first inclined surface 40a in the radial direction. The second inclined surface 40b is inclined with respect to the reference line L1 so as to come closer to the reference line L1 in the circumferential direction as it goes inward in the radial direction.

When viewed in the axial direction, the second connection surface 60 of the second yoke forming part 26a includes a third inclined surface 60a to be connected to the first inclined surface 40a of the first connection surface 40 and a fourth inclined surface 60b to be connected to the second inclined surface 40b of the first connection surface 40. The third inclined surface 60a is inclined with respect to the reference line L1 so as to extend along the first inclined surface 40a to which the third inclined surface 60a is to be connected, and the fourth inclined surface 60b is inclined with respect to the reference line L1 so as to extend along the second inclined surface 40b to which the fourth inclined surface 60b is to be connected.

In this embodiment, when viewed in the axial direction, an angle α formed by the reference line L1 (straight lines L2 and L3) and the first inclined surface 40a is set to be 5° or more, for example. In this embodiment, when the first inclined surface 40a and the third inclined surface 60a come into contact with each other, a compression stress occurs in the first yoke forming part 24a. The compression stress is supposed to occur in a direction perpendicular to the first inclined surface 40a. On the other hand, the core loss of the first yoke forming part 24a increases when the first yoke forming part 24a is excited in a direction parallel to the direction of application of the compression stress. In this embodiment, the first yoke forming part 24a is mainly excited in the circumferential direction. Therefore, if the compression stress occurring in the circumferential direction in the first yoke forming part 24a can be reduced, the increase of the core loss can be reduced. In view of this, in this embodiment, the angle α is preferably set to 5° or more in order to adequately reduce application of the compression stress in the circumferential direction from the third inclined surface 60a to the first yoke forming part 24a. When viewed in the axial direction, the angle formed by the reference line L1 and the third inclined surface 60a is set in the same way as the angle α. In this embodiment, by setting the angle α to 5° or more, the first yoke forming part 24a is appropriately prevented from moving outward in the radial direction with respect to the second yoke forming part 26a, and the second yoke forming part 26a is appropriately prevented from moving inward in the radial direction with respect to the first yoke forming part 24a. In this way, an adequate fixture strength of the first core 24 and the second core 26 can be ensured.

In addition, in this embodiment, the angle α is set to 30° or less, for example. With the rotary electric machine 100 according to this embodiment, the direction of the magnetic flux flowing in the second core 26 varies as the rotor 12 (see Figure 1) rotates. Specifically, the magnetic flux may mainly flow in the circumferential direction or may flow in the radial direction in the tooth forming part 26b and then change the direction to the circumferential direction in a smooth curve in the second yoke forming part 26a to flow into the first yoke forming part 24a. An air gap usually occurs between the first inclined surface 40a and the third inclined surface 60a due to a problem with working precision. When viewed in the axial direction, the first inclined surface 40a and the third inclined surface 60a are inclined with respect to the reference line L1, so that the air gap is also formed to extend in an inclined direction with respect to the reference line L1. As the inclination angle of the inclined surfaces 40a and 60a with respect to the reference line L1 increases, the flow direction of the magnetic flux and the length direction of the air gap become more parallel to each other when the magnetic flux flows from the tooth forming part 26b into the first yoke forming part 24a in a curve as described above. In this case, the length of the air gap in the flow direction of the magnetic flux increases, and excitation of the yoke 20a is inhibited. As a result, the core loss increases. In view of this, in this embodiment, the angle α is preferably set to 30° or less so that the length of the air gap in the flow direction of the magnetic flux decreases. In addition, by setting the angle α to 30° or less, interference between the first core 24 and the second core 26 can be appropriately prevented when inserting the second core 26 into the first core 24. This facilitates insertion of the second core 26 into the first core 24.

In addition, when viewed in the axial direction, an angle β formed by the reference line L1 (straight lines L4 and L5) and the second inclined surface 40b is set to fall within a range from 180°/n+5° to 180°/n+30°, provided that n denotes the number of teeth 20b of the stator core 20 designed. When viewed in the axial direction, the angle formed by the reference line L1 and the fourth inclined surface 60b of the second yoke forming part 26a is set in the same way as the angle β. By setting the angle β to 180°/n+5° or more, application of the compression stress in the circumferential direction from the fourth inclined surface 60b to the first yoke forming part 24a can be reduced. Since the first yoke forming part 24a is mainly excited in the circumferential direction as described above, the increase of the core loss can be reduced by reducing the compression stress in the circumferential direction. In addition, by setting the angle β to 180°/n+5° or more, the first yoke forming part 24a is appropriately prevented from moving inward in the radial direction with respect to the second yoke forming part 26a, and the second yoke forming part 26a is appropriately prevented from moving outward in the radial direction with respect to the first yoke forming part 24a. In this way, an adequate fixture strength of the first core 24 and the second core 26 can be ensured.

In this embodiment, each connection part 24b is configured to be easily deformed when the first core 24 is bent into an annular or arc shape. Specifically, the thickness of the connection part 24b in the radial direction is set to be adequately smaller than the length of the second yoke forming part 26a in the radial direction. In this embodiment, the thickness of a portion of the connection part 24b that has the smallest thickness in the radial direction is set to be equal to or less than a half of the length of the second yoke forming part 26a in the radial direction. The thickness of a portion of the connection part 24b that has the smallest thickness in the radial direction is preferably set to be equal to or less than a fifth of the length of the second yoke forming part 26a in the radial direction and is more preferably set to be equal to or less than a tenth of the length of the second yoke forming part 26a in the radial direction.

Furthermore, in this embodiment, the length of the recess 28 in the circumferential direction is set to be larger than the thickness of a portion of the second yoke forming part 26a that has the smallest thickness in the circumferential direction. Furthermore, in this embodiment, the length of the recess 28 in the circumferential direction is set to be larger than the thickness of a portion of the second yoke forming part 26a that has the largest thickness in the circumferential direction.

### (Manufacturing Method for Stator)

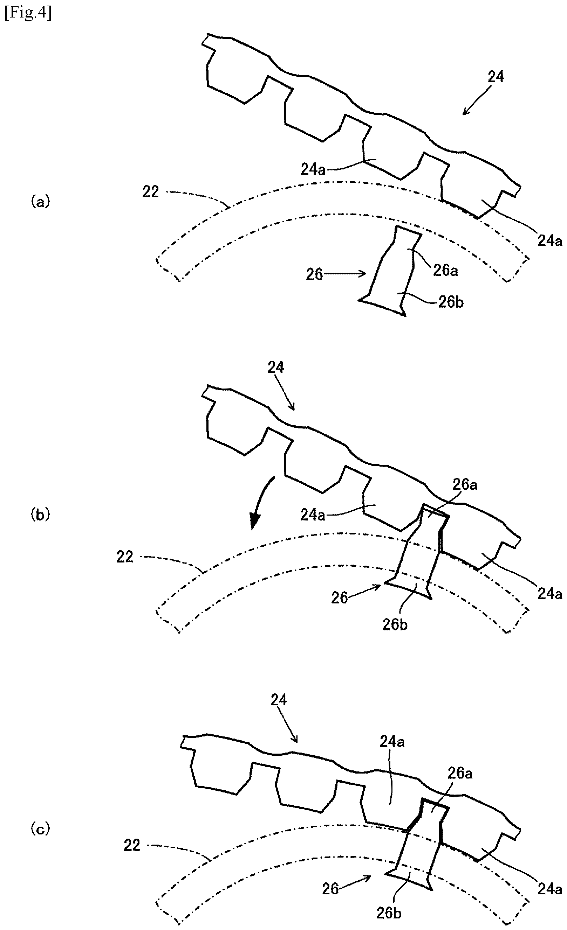

In the following, an example of a manufacturing method for the stator 10 will be briefly described. Figure 4 is a diagram for illustrating the manufacturing method for the stator 10.

As shown in Figure 4(a), in the manufacturing method according to this embodiment, the first core 24 in the expanded state is first arranged on the outer side of the coil 22 arranged in an annular shape when viewed in the axial direction. As shown in Figures 4(b) and 4(c), the second core 26 is then inserted into the coil 22 and the first core 24 (more specifically, between a pair of first yoke forming parts 24a) from the inner side of the coil 22 while bending the first core 24 along the outer circumference of the coil 22. In the same manner, the plurality of second cores 26 are sequentially inserted into the coil 22 and the first core 24. The stator 10 (see Figure 1) is manufactured by attaching the coil 22 and the plurality of second cores 26 to the first core 24 in this way.

In the case of directly winding a wire around the stator core, lap winding, which involves overlapping of windings, is typically used. However, the size of the coil ends is inevitably large due to the interference between the windings. Wave winding is a way of winding that can reduce the overlapping of windings compared with lap winding. Wave winding allows a conductor to be arranged without wasting space, so that the size of the coil ends can be reduced. However, working space between the teeth is small, and therefore the teeth interfere with the conductor working robot when the conductor is shaped for wave winding in order to directly wind the conductor around the stator core. Therefore, it is practically difficult to adopt wave winding to directly wind the conductor around the stator core. On the other hand, in the case of assembling a segment coil formed by a plurality of conductors shaped for wave winding in advance onto the stator core, wave winding is possible. However, a plurality of conductors need to be connected by welding at the coil ends. Therefore, in the case where the segment coil is used, the size of the coil ends is also inevitably large at the welded parts. To the contrary, in the manufacturing method according to this embodiment, a coil shaped for wave winding at both coil ends is prepared in advance under less restrictions of working space, and therefore, the stator 10 can be manufactured without using a segment coil. In this case, the size of the coil ends can be easily reduced.

In this embodiment, in the circumferential direction, the width of the second yoke forming part 26a is smaller than the width of the coil supporting part 30. Since the second yoke forming part 26a has a smaller width in this way, the second yoke forming part 26a can be easily inserted between a pair of adjacent first yoke forming parts 24a.

### (Operational Advantages)

In this embodiment, as described with reference to Figure 3, the first core 24 and the second core 26 are connected to each other with the first inclined surface 40a and the third inclined surface 60a in contact with each other and the second inclined surface 40b and the fourth inclined surface 60b in contact with each other on the inner side of the first inclined surface 40a and the third inclined surface 60a in the radial direction. The first connection surface 40 is inclined with respect to the reference line L1 so as to come closer to the reference line L1 in the circumferential direction as it goes outward in the radial direction, and the second inclined surface 40b is inclined with respect to the reference line L1 so as to come closer to the reference line L1 in the circumferential direction as it goes inward in the radial direction. The third inclined surface 60a is inclined with respect to the reference line L1 so as to extend along the first inclined surface 40a to which the third inclined surface 60a is to be connected, and the fourth inclined surface 60b is inclined with respect to the reference line L1 so as to extend along the second inclined surface 40b to which the fourth inclined surface 60b is to be connected.

With the configuration described above, the first core 24 is prevented from moving outward in the radial direction by the first inclined surface 40a of the first core 24 coming into contact with the third inclined surface 60a of the second core 26. The second core 26 is prevented from moving inward in the radial direction by the third inclined surface 60a of the second core 26 coming into contact with the first inclined surface 40a of the first core 24. Furthermore, the second core 26 is prevented from moving outward in the radial direction by the fourth inclined surface 60b of the second core 26 coming into contact with the second inclined surface 40b of the first core 24. In this way, in this embodiment, the second yoke forming part 26a of the second core 26 can be fixed between a pair of adjacent first yoke forming parts 24a with reliability. That is, the yoke 20a and the plurality of teeth 20b can be appropriately fixed to each other. As a result, occurrence of vibrations in the stator 10 can be adequately prevented during use of the rotary electric machine 100.

In this embodiment, the first connection surface 40 of the first yoke forming part 24a is shaped to project outward in the circumferential direction, and the second connection surface 60 of the second yoke forming part 26a is shaped to be recessed inward in the circumferential direction. In this case, the second core 26 can be moved effortlessly into an appropriate position (designed position) along the first connection surface 40, even if the dimensional accuracy of the first connection surface 40 and the second connection surface 60 is not so high. Therefore, the first connection surface 40 and the second connection surface 60 can be in contact with each other under adequate force. As a result, the rigidity and shape precision of the stator core 20 can be adequately high.

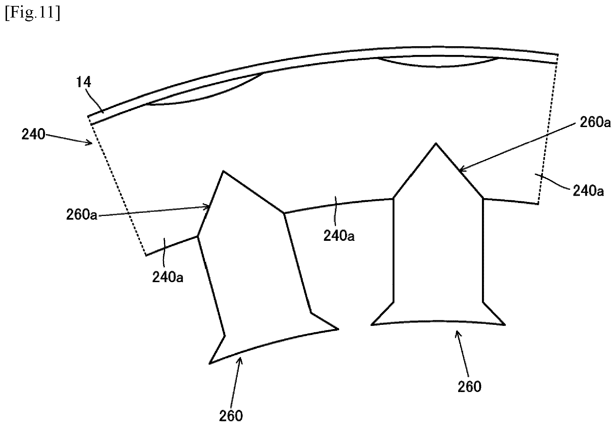

In this embodiment, since the first connection surface 40 and the second connection surface 60 are in contact with each other under adequate force as described above, a compression stress of a certain magnitude occurs in the circumferential direction at the contact between the first yoke forming part 24a and the second yoke forming part 26a. Therefore, for example, when the first core 24 is made of a grain-oriented electromagnetic steel sheet in order that the first yoke forming part 24a has a high magnetic permeability in the circumferential direction, the flow of the magnetic flux may be inhibited at the contact between the first yoke forming part 24a and the second yoke forming part 26a. In that case, the increase of the core loss may be unable to be adequately reduced even if the first core 24 is made of a grain-oriented electromagnetic steel sheet. Therefore, in the case of making the first core of a grain-oriented electromagnetic steel sheet, the stator may be configured as shown in Figure 11, for example. With the stator shown in Figure 11, a second yoke forming part 260a of a second core 260 is inserted between a pair of first yoke forming parts 240a of a first core 240 and fixed to the first core 240 by bonding. In this case, compared with the stator 10 according to this embodiment in which the first core 24 and the second core 26 are fixed to each other by the first yoke forming parts 24a being sandwiched between the adjacent second yoke forming parts 26a, the occurrence of a compression stress in the circumferential direction in the first yoke forming parts 240a can be reduced. Therefore, the increase of the core loss can be reduced. However, with the stator 10 according to this embodiment, the first core 24 is made of a non-oriented electromagnetic steel sheet. Therefore, the flow of the magnetic flux is not inhibited even if a compression stress of a certain magnitude occurs in the circumferential direction at the contact between the first yoke forming part 24a and the second yoke forming part 26a. Therefore, the increase of the core loss can be reduced.

In this embodiment, furthermore, the recess 28 is formed in the outer surface of the connection part 24b located on the outer side of the second core 26 in the radial direction. Thus, when attaching the second core 26 to the first core 24, the connection part 24b can be prevented from projecting outward in the radial direction from the first yoke forming part 24a even if the connection part 24b is deformed to bulge outward. Therefore, the stator 10 can be smoothly inserted into the case 14. The recess 28 can be used as a point of fixture at which the stator 10 is fixed to the case 14. If shrink fit is not used for fixing the case 14 to the stator 10, the core loss degradation (core loss increase) of the stator core 20 because of the compression stress can be avoided. Even when shrink fit is used, if the recess 28 is used for fixing the stator 10 to the case 14, the margin for shrink fit can be reduced owing to the fixing force of the recess 28. As a result, the compression stress occurring in the stator core 20 can be reduced, and the core loss degradation of the stator core 20 can be reduced.

In this embodiment, furthermore, the connection part 24b is formed integrally with a pair of adjacent first yoke forming parts 24a. In this case, an adequate binding force can be ensured between the pair of first yoke forming parts 24a and the connection part 24b, so that the rigidity and shape precision of the stator core 20 can be adequately high.

In this embodiment, furthermore, the first connection surface 40 and the second connection surface 60 at which the first core 24 and the second core 26 are connected to each other are inclined with respect to the radial direction. Therefore, a compression stress occurs in a direction inclined with respect to the radial direction at the connection between the first core 24 and the second core 26. In other words, a compression stress in the radial direction can be prevented from being applied from the second core 26 to the first core 24. Furthermore, with the rotary electric machine 100 according to this embodiment, the first yoke forming parts 24a and the case 14 come into contact with each other when the stator 10 is inserted into the case 14. In this case, although a compression stress in the radial direction is applied from the case 14 to the first yoke forming parts 24a, the first yoke forming parts 24a are excited mainly in the circumferential direction, so that the compression stress poses no problem with the core loss of the stator core 20. A compression stress can also occur in the circumferential direction as the first yoke forming parts 24a are compressed in the radial direction. However, the compression stress in the circumferential direction tends to be concentrated at the connection parts 24b, which have a smaller width in the radial direction. Therefore, the increase of the compression stress in the circumferential direction in the first yoke forming parts 24a is reduced. Therefore, the yoke 20a can be sufficiently efficiently excited in the circumferential direction.

Since the compression stress in the circumferential direction mainly occurs in the connection parts 24b, the compression stress applied from the case 14 to the second core 26 can be reduced. In addition, since the first inclined surface 40a and the second inclined surface 40b are inclined with respect to the reference line L1, the direction of the compression stress applied from the first core 24 to the second core 26 is limited. As a result, the occurrence of the compression stress in the radial direction in the second core 26 is reduced. The teeth 20b are mainly excited in the radial direction, and a portion of the yoke 20a that is close to the teeth 20b also tends to be excited in a direction close to the radial direction. Therefore, the teeth 20b and the yoke 20a can be efficiently excited due to the compression stress acting in the radial direction in the second core 26 being reduced as described above.

### (Variations)

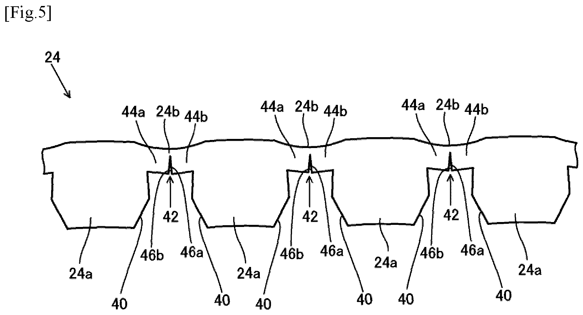

Figure 5 is a diagram showing a variation of the first core 24. The first core 24 shown in Figure 5 differs from the first core 24 shown in Figure 2 in the points described below. In this embodiment, a notch 42 is formed in the connection part 24b on an inner side thereof in the radial direction, thereby partitioning the connection part 24b into a first connection part 44a and a second connection part 44b. The first connection part 44a and the second connection part 44b are arranged side by side in the circumferential direction of the stator core 20.

In this embodiment, the notch 42 is formed so that the first connection part 44a has a third connection surface 46a that faces to the second connection part 44b in the circumferential direction, and the second connection part 44b has a fourth connection surface 46b that faces to the first connection part 44a in the circumferential direction and is to be connected to the third connection surface 46a. The first connection part 44a and the second connection part 44b are integrally continuous on the outer side of the notch 42 in the radial direction (on the outer side of the third connection surface 46a and the fourth connection surface 46b in the radial direction). In the stator core 20, the third connection surface 46a and the fourth connection surface 46b are located on the outer side of the first connection surface 40 in the radial direction.

In this embodiment, since the notch 42 is formed in the connection part 24b, the connection part 24b can be easily deformed when bending the first core 24 into an arch shape. Furthermore, the width in the circumferential direction of a portion of the first core 24 into which the second core 26 is to be inserted (a gap between adjacent first yoke forming parts 24a) can be increased in design by the width of the notch 42. This facilitates attachment of the second core 26 to the first core 24. When the steel sheet (the first core 24) is deformed, a core loss degradation occurs in the deformed part due to plastic deformation or residual stress. In this regard, in the outermost peripheral part of the yoke 20a, portions located on straight lines extending in the radial direction by passing through the centers of the teeth 20b in the circumferential direction are excited to a lesser extent. In this embodiment, most of the deformation of the first core 24 intensively occurs in the portions that are excited to a lesser extent, so that the amount of core loss degradation of the first core 24 due to the deformation is extremely low.

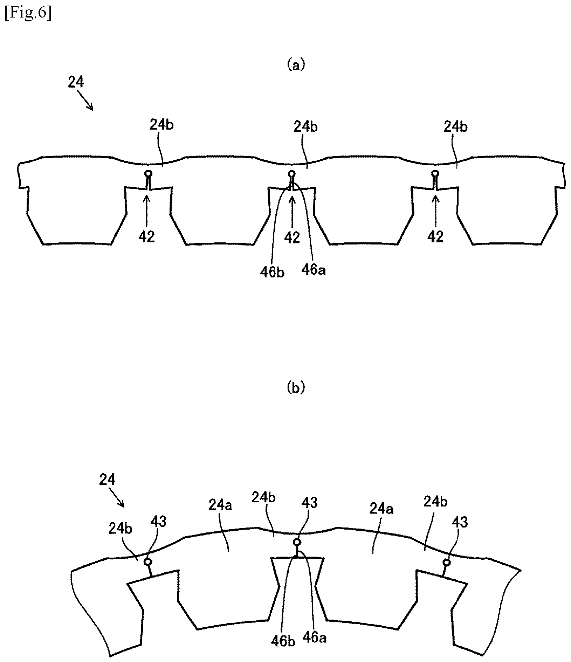

As shown in Figure 6(a), a cylindrical cavity may be formed at a front end of the notch 42. In this embodiment, as shown in Figure 6(b), the notch 42 in the first core 24 is shaped so that a cavity 43 is formed on the outer side of the third connection surface 46a and the fourth connection surface 46b in the radial direction when the first core 24 is bent into an arc shape. By forming the notch 42 having such a shape, the connection part 24b can be smoothly deformed when bending the first core 24 into an arc shape.

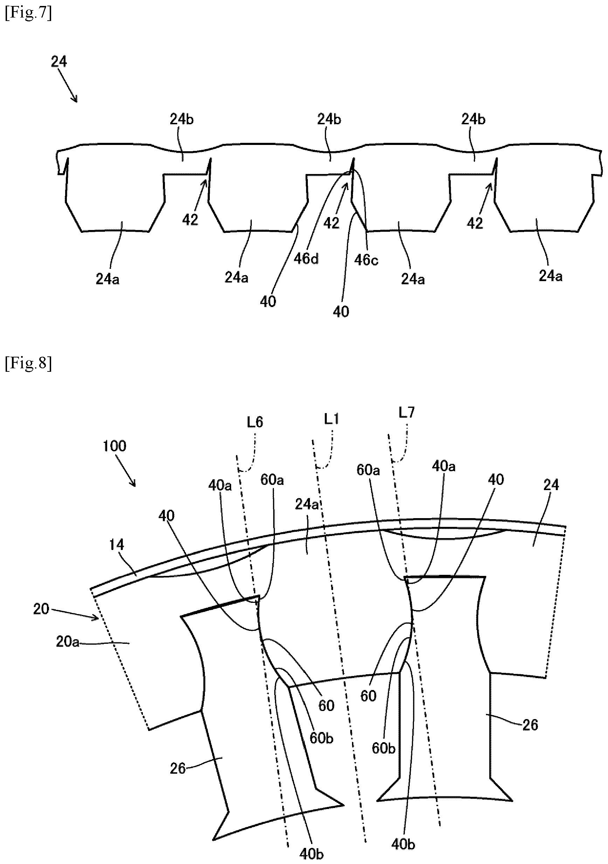

The position where the notch is formed is not limited to the position in the example described above. For example, as shown in Figure 7, the notch 42 may be formed in the first core 24 at the boundary between the connection part 24b and the first yoke forming part 24a.

In this embodiment, as a result of the notch 42 being formed, a fifth connection surface 46c that faces to the first yoke forming part 24a in the circumferential direction is formed at one end of the connection part 24b in the circumferential direction, and a sixth connection surface 46d that faces to the fifth connection surface 46c in the circumferential direction and is to be connected to the fifth connection surface 46c is formed on the first yoke forming part 24a. The first yoke forming part 24a and the connection part 24b are integrally continuous on the outer side of the notch 42 in the radial direction (on the outer side of the fifth connection surface 46c and the sixth connection surface 46d in the radial direction). In the stator core 20, the fifth connection surface 46c and the sixth connection surface 46d are located on the outer side of the first connection surface 40 in the radial direction.

In this embodiment, again, since the notch 42 is formed, the connection part 24b can be easily deformed when bending the first core 24 into an arch shape. This facilitates attachment of the second core 26 to the first core 24. The notch formed in this embodiment also may have a shape similar to that of the notch 42 shown in Figure 6.

In the embodiment described above, a case has been described in which when viewed in the axial direction, the first inclined surface 40a, the second inclined surface 40b, the third inclined surface 60a, and the fourth inclined surface 60b are formed to extend in a straight line. However, the shape of the first inclined surface 40a, the second inclined surface 40b, the third inclined surface 60a, and the fourth inclined surface 60b is not limited to that in the example described above.

Figure 8 is a diagram showing another example of the shape of the first inclined surface 40a, the second inclined surface 40b, the third inclined surface 60a, and the fourth inclined surface 60b. In Figure 8, not only the reference line L1 but also straight lines L6 and L7 that are parallel to the reference line L1 when viewed in the axial direction are shown. As shown in Figure 8, when viewed in the axial direction, the first inclined surface 40a, the second inclined surface 40b, the third inclined surface 60a, and the fourth inclined surface 60b may be formed in an arch shape. With the stator core 20 according to this embodiment, the same effects as those of the stator core 20 described earlier are achieved.

In the embodiment described above, a case has been described in which the first connection surface 40 and the second connection surface 60 each have two inclined surfaces that are inclined with respect to the reference line L1. However, the first connection surface and the second connection surface may each include a surface that is parallel to the reference line L1 when viewed in the axial direction.

In the embodiment described above, a case has been described in which one first core 24 is bent into an annular shape and used as a component of the stator core 20. However, a plurality of first cores 24 bent in an arc shape may be connected to each other into an annular shape and used as a component of the stator core 20. Alternatively, a part of the stator core may be formed by a band-like first core 24 and a plurality of second cores 26, and another part of the stator core may be formed by a core other than the band-like core (expanded core). For example, in the other part of the stator core described above, the yoke and the teeth may be integrally formed. Alternatively, for example, in the other part of the stator core described above, a plurality of separate yoke forming parts may be provided (that is, in the first core 24 described above, the connection parts 24b are omitted, and only two or more first yoke forming parts 24a are provided), and second cores 26 may be sandwiched between the yoke forming parts.

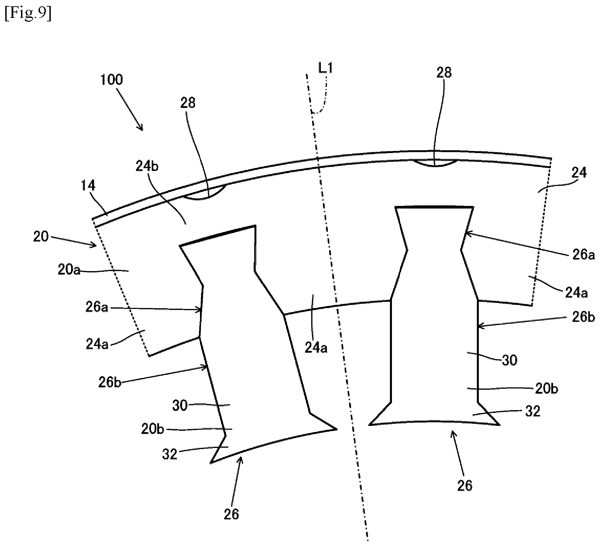

In the embodiment described above, the length of the recess 28 in the circumferential direction is set to be larger than the thickness of the portion of the second yoke forming part 26a that has the smallest thickness in the circumferential direction. However, as shown in Figure 9, the length of the recess 28 in the circumferential direction may be set to be smaller than the thickness of the portion of the second yoke forming part 26a that has the smallest thickness in the circumferential direction. Although not shown, the length of the recess 28 in the circumferential direction may be set to be smaller than the thickness of the portion of the second yoke forming part 26a that has the largest thickness in the circumferential direction and is larger than the thickness of the portion of the second yoke forming part 26a that has the smallest thickness in the circumferential direction.

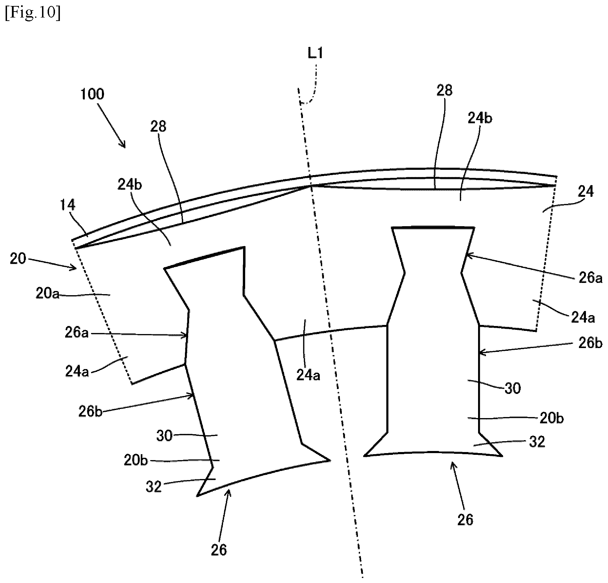

In the embodiment described above, furthermore, the recesses 28 adjacent to each other in the circumferential direction are separate from each other. However, as shown in Figure 10, the recesses 28 adjacent to each other in the circumferential direction may be continuous to each other.

### INDUSTRIAL APPLICABILITY

As described above, according to the present invention, a split-type stator core having a yoke and teeth that can be appropriately fixed and a rotary electric machine provided with the stator core can be provided.

### REFERENCE SIGNS LIST

- 10: stator
- 12: rotor
- 14: case
- 20: stator core
- 20a: yoke
- 20b: tooth
- 22: coil
- 24: first core
- 24a: first yoke forming part
- 24b: connection part
- 26: second core
- 26a: second yoke forming part
- 26b: tooth forming part
- 28: recess
- 30: coil supporting part
- 40: first connection surface
- 40a: first inclined surface
- 40b: second inclined surface
- 50: reference circle
- 60: second connection surface
- 60a: third inclined surface
- 60b: fourth inclined surface
- 100: rotary electric machine
- L1: reference line

## Claims

1. A split-type stator core having a cylindrical yoke and a plurality of teeth that project from the yoke inward in a radial direction of the yoke, comprising:
a band-like first core; and a plurality of second cores that are fixed to the first core so as to project from the first core inward in the radial direction of the yoke,
wherein the first core has a plurality of first yoke forming parts that form the yoke and are arranged at intervals in a circumferential direction of the yoke, and a plurality of connection parts that connect outer edges in the radial direction of the first yoke forming parts adjacent to each other in the circumferential direction to each other,
each of the second cores has a second yoke forming part that forms the yoke and is sandwiched between a pair of the first yoke forming parts adjacent in the circumferential direction, and a tooth forming part that projects inward in the radial direction from the pair of first yoke forming parts to form one of the teeth,
the first yoke forming part has a first connection surface to be connected to the second yoke forming part on each side in the circumferential direction,
the second yoke forming part has a second connection surface to be connected to the first connection surface of the first yoke forming part on each side in the circumferential direction,
when viewed in an axial direction of the yoke, provided that a virtual straight line extending in the radial direction by passing through a center of the first yoke forming part in the circumferential direction is a reference line of the first yoke forming part, the first connection surface includes a first inclined surface that is inclined with respect to the reference line so as to come closer to the reference line in the circumferential direction as it goes outward in the radial direction, and a second inclined surface that is provided on an inner side of the first inclined surface in the radial direction and is inclined with respect to the reference line so as to come closer to the reference line in the circumferential direction as it goes inward in the radial direction, and
when viewed in the axial direction, the second connection surface to be connected to the first connection surface of the first yoke forming part has a third inclined surface and a fourth inclined surface that are inclined with respect to the reference line so as to extend along the first inclined surface and the second inclined surface of the first yoke forming part, respectively.

2. The stator core according to Claim 1, wherein the tooth forming part has a coil supporting part that supports a coil, and
in the circumferential direction, a width of the second yoke forming part is smaller than a width of the coil supporting part.

3. The stator core according to Claim 1 or 2, wherein when viewed in the axial direction, provided that a virtual circle that is centered on an axial center of the yoke and circumscribes the plurality of first yoke forming parts is a reference circle, a recess that is recessed inward from the reference circle in the radial direction is formed in an outer surface of the connection part in the radial direction.

4. The stator core according to any one of Claims 1 to 3, wherein the connection part is formed integrally with the pair of first yoke forming parts adjacent to each other.

5. The stator core according to any one of Claims 1 to 4, wherein the connection part has a first connection part and a second connection part arranged side by side in the circumferential direction,
the first connection part has a third connection surface that faces to the second connection part in the circumferential direction,
the second connection part has a fourth connection surface that faces to the first connection part in the circumferential direction and is to be connected to the third connection surface, and
the first connection part and the second connection part are integrally continuous to each other on an outer side of the third connection surface and the fourth connection surface in the radial direction.

6. The stator core according to any one of Claims 1 to 5, wherein the first core and the plurality of second cores each include a plurality of non-oriented electromagnetic steel sheets stacked on one another.

7. A method of manufacturing a stator including a stator core according to any one of Claims 1 to 6, wherein
the first core in an expanded state is disposed on an outer side of a coil arranged in an annular shape, and
the coil and the plurality of second cores are attached to the first core by sequentially inserting the plurality of second cores into the coil and the first core from an inner side of the coil while bending the first core along an outer circumference of the coil.

8. A rotary electric machine, comprising:
a stator core according to any one of Claims 1 to 6;
a coil supported by the plurality of teeth of the stator core; and
a rotor disposed inside the stator core.
